# EUROPEAN PATENT SPECIFICATION

(11) **EP 1 484 489 B1**
(45) Date of publication and mention of the grant of the patent: **17.04.2013**
(21) Application number: 04253168.1
(22) Date of filing: 28.05.2004
(51) Int. Cl.: F01D 15/00, F02C 7/143, F04D 29/58

(54) **Intake air cooling system for a gas turbine engine**
Einlassluftkühlsystem für eine Gasturbine
Système de refroidissement de l'air d'entrée pour une turbine à gaz

(30) Priority: 06.06.2003 US 456409
(43) Date of publication of application: 08.12.2004
(73) Proprietor: GENERAL ELECTRIC COMPANY, Schenectady, NY 12345 (US)
(72) Inventor: Stegmaier, James William, West Chester Ohio 45069 (US); Joshi, Narendra, Cincinnati Ohio 45241 (US)
(74) Representative: Williams, Andrew Richard

(56) References cited:
- EP-A2- 1 039 115
- WO-A-99/67102
- US-A- 5 321 944
- US-B1- 6 484 506

## Description

This invention relates generally to gas turbine engines, and more specifically to an apparatus for operating gas turbine engines.

Gas turbine engines generally include, in serial flow arrangement, a high-pressure compressor for compressing air flowing through the engine, a combustor in which fuel is mixed with the compressed air and ignited to form a high temperature gas stream, and a high pressure turbine. The high-pressure compressor, combustor and high-pressure turbine are sometimes collectively referred to as the core engine. Such gas turbine engines also may include a low-pressure compressor, or booster, for supplying compressed air to the high pressure compressor.

Gas turbine engines are used in many applications, including in aircraft, power generation, and marine applications. The desired engine operating characteristics vary, of course, from application to application. More particularly, when the engine is operated in an environment in which the ambient temperature is reduced in comparison to other environments, the engine may be capable of operating with a higher shaft horse power (SHP) and an increased output, without increasing the core engine temperature to unacceptably high levels. However, if the ambient temperature is increased, the core engine temperature may rise to an unacceptably high level if a high SHP output is being delivered.

To facilitate meeting operating demands, even when the engine ambient temperature is high, e.g., on hot days, at least some known gas turbine engines include inlet system evaporative coolers or refrigeration systems to facilitate reducing the inlet air temperature. In one such arrangement, shown in US- B1- 6 484 506, solar power is used to power inlet chilling. Other systems use water spray fogging or injection devices to inject water into either the booster or the compressor to facilitate reducing the operating temperature of the engine. However, within known gas turbine engines, heat energy removed from the working fluid or gas path air, while cooling the gas path air, is eventually lost to the atmosphere rather than used to further improve the efficiency of the turbine.

According to the invention, there is provided a gas turbine engine according to claim 1 herein.

The invention will now be described in greater detail, by way of example, with reference to the drawings, the single figure of which is a block diagram of an exemplary gas turbine engine including a cooling system.

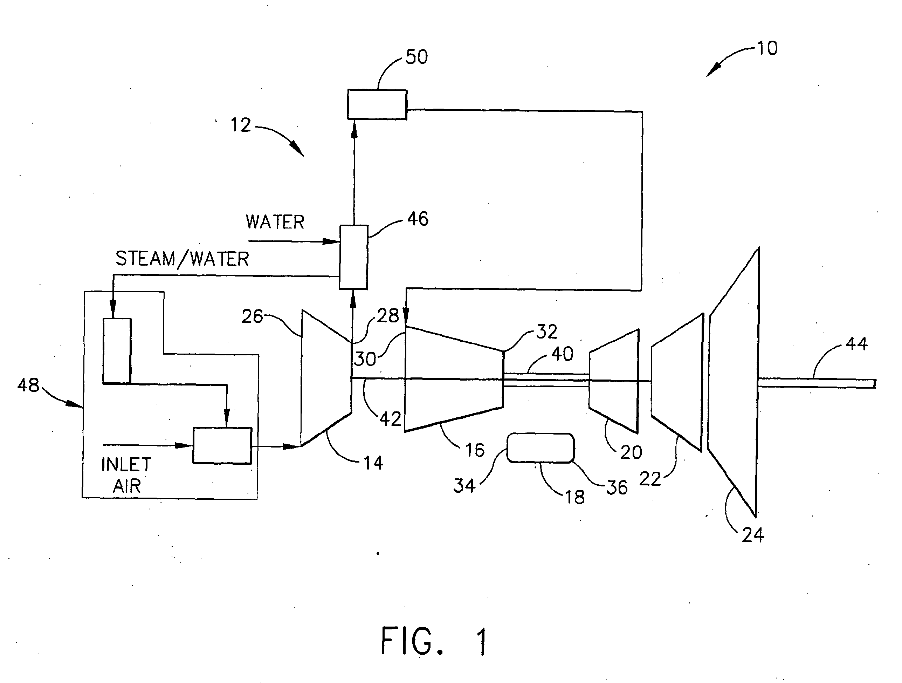

Figure 1 is a block diagram of a gas turbine engine 10 which includes a system for cooling gas path air generally represented at 12. With the exception of gas path air cooling system 12, which will be described hereinafter, engine 10 is known in the art and includes, in serial flow relationship, a low pressure compressor or booster 14, a high pressure compressor 16, a combustor 18, a high pressure turbine 20, a low pressure, or intermediate, turbine 22, and a power turbine or free turbine 24. Low pressure compressor or booster 14 has an inlet 26 and an outlet 28. High pressure compressor 16 includes an inlet 30 and an outlet 32. Combustor 18 has an inlet 34 that is substantially coincident with high pressure compressor outlet 32, and an outlet 36. High pressure turbine 20 is coupled to high pressure compressor 16 with a first rotor shaft 40, and low pressure turbine 22 is coupled to low pressure compressor 14 with a second rotor shaft 42. Rotor shaft 42 is coaxially positioned within first rotor shaft 40 about a longitudinal centerline axis of engine 10. Engine 10 may be used to drive a load (not shown) which may be located aft of engine 10 and is also drivingly coupled to a power turbine shaft 44. Alternatively, the load may be disposed forward of engine 10 and coupled to a forward extension (not shown) of second rotor shaft 42.

In operation, outside air is drawn into inlet 26 of low pressure compressor 14, and compressed air is supplied from low pressure compressor 14 to high pressure compressor 16. High pressure compressor 16 further compresses the air and delivers the high pressure air to combustor 18 where it is mixed with fuel and the fuel ignited to generate high temperature combustion gases. The combustion gases are channeled from combustor 18 to drive turbines 20, 22, and 24.

The power output of engine 10 is related to the temperatures of the gas flow at various locations along the gas flow path. More specifically, the temperature at high-pressure compressor outlet 32 and the temperature of combustor outlet 36 are closely monitored during the operation of engine 10. Lowering the temperature of the gas flow entering the compressor generally results in increasing the power output of engine 10.

Cooling system 12 includes a heat exchanger 46 coupled in flow communication to low pressure compressor 14, and a chiller 48 coupled in flow communication to heat exchanger 46. Heat exchanger 46 has a working fluid flowing therethrough for storing energy extracted from the gas flow path. In one embodiment, the working fluid is at least one of, but is not limited to being steam or water. More specifically, heat exchanger 46 extracts heat energy from the gas flow path and uses the extracted energy to power chiller 48. Specifically, the working fluid is routed to chiller 48 wherein energy is extracted from the working fluid to power chiller 48. Chiller 48 facilitates cooling inlet air supplied to compressor inlet 26. In one embodiment, the heat exchanger 46 is a heat recovery steam generator. In another embodiment, heat exchanger 46 is a water-to-air heat exchanger. In one embodiment, chiller 48 is an absorption chiller.

Cooling system 12 also includes an intercooler 50 in flow communication with, and downstream from, heat exchanger 46. Gas flow from heat exchanger 46 is channeled to intercooler 50 for additional cooling prior to being returned to high-pressure compressor 16. In one embodiment, intercooler 50 is a heat exchanger.

In operation, compressor discharge flow is channeled from low-pressure compressor 14 to heat exchanger 46. Heat exchanger 46 extracts sufficient heat energy from the flow to power chiller 48, while cooling the discharge flow in the process. The extracted energy is stored in the working fluid which is then channeled to chiller 48 and used to power chiller 48. Chiller 48 reduces an operating temperature of inlet air entering low-pressure compressor 14. Chiller 48 operates in a manner that is known in the art to provide cooling to reduce the operating temperature of the gas turbine inlet air.

As an example, on a 43°C (110° F) day, cooling system 12, with steam or hot water as a working fluid, can extract sufficient energy to chill the inlet air at low-pressure compressor inlet to at least 15°C (59° F), thus facilitating an improvement in both power output from turbine engine 10 and an increase in operating efficiency of engine 10. In one embodiment, the low-pressure compressor discharge air is reduced at least 38°C (100° F) by using the process described herein.

Heat exchanger 46 is in flow communication with intercooler 50 which receives cooled discharge air from heat exchanger 46. The discharge air can be additionally cooled to a desired temperature using intercooler 50 before being returned to high-pressure compressor 16. Such a reduction in the operating temperature of the gas flow facilitates reducing the power requirements for high-pressure compressor 16 and this leaves more energy available for power turbine 24. In addition, the temperature at high-pressure compressor outlet 32 is reduced so that the engine 10 operates with greater temperature margins relative to temperature design limits.

The above-described cooling system provides a cost-effective and highly reliable method for gas flow cooling in a gas turbine engine. The cooling system uses heat energy removed from the gas path while cooling the gas path air to facilitate increasing the potential power output of the engine. Accordingly, a gas path cooling system is provided that facilitates reducing gas path temperatures thereby improving engine efficiency and reliability in a cost-effective manner.

## Claims

1. A gas turbine engine (10) with a cooling system (12), wherein the gas turbine engine (10) includes at least a compressor (14) and a turbine (22), said cooling system (12) comprising:
a heat exchanger (46) coupled downstream from the compressor (14) such that compressed discharge air from the compressor (14) is routed therethrough, said heat exchanger (46) having a working fluid circulating therethrough to transfer heat energy from the compressed discharge air to the working fluid; and
a chiller (48) coupled in flow communication to said heat exchanger (46), said chiller (48) extracting energy from the working fluid to facilitate reducing a temperature of inlet air channeled to the compressor (14).

2. A gas turbine engine (10) in accordance with Claim 1 wherein the compressor (14) is a low-pressure compressor, the gas turbine engine (10) further comprising a high-pressure compressor (16) downstream of the low-pressure compressor (14), said heat exchanger (46) being positioned between the low-pressure compressor (14) and the high-pressure compressor (16).

3. A gas turbine engine (10) in accordance with Claim 1 wherein the compressor (14) is a low-pressure compressor (14), the gas turbine engine (10) further comprising a high-pressure compressor (16) downstream of the low-pressure compressor (14), and an intercooler (50) coupled downstream from said heat exchanger (46), said intercooler (50) being configured to receive airflow from said heat exchanger (46) at a first temperature, and channel the airflow to the high pressure compressor (16) at a second temperature that is lower than the first temperature.

4. A gas turbine engine (10) in accordance with Claim 1 wherein the heat exchanger working fluid is at least one of water, steam, and a mixture of ammonia and water.

5. A gas turbine engine (10) in accordance with Claim 1 wherein said heat exchanger (46) is a heat recovery steam generator.

## Patentansprüche

1. Gasturbinenmaschine (10) mit einem Kühlsystem (12), wobei die Gasturbinenmaschine (10) wenigstens einen Verdichter (14) und eine Turbine (22) enthält, und das Kühlsystem (12) aufweist:
einen stromabwärts von dem Verdichter (14) dergestalt angeschlossenen Wärmetauscher (46), dass verdichtete Auslassluft aus dem Verdichter (14) durch diesen hindurch geführt wird, wobei der Wärmetauscher (46) ein durch diesen zirkulierendes Arbeitsfluid besitzt, um aus der verdichteten Auslassluft Wärmeenergie an das Arbeitsfluid zu übertragen; und
einen in Strömungsverbindung mit dem Wärmetauscher (46) verbundenen Kühler (48), wobei der Kühler (48) dem Arbeitsfluid Energie entzieht, um eine Reduzierung einer Temperatur der dem Verdichter (14) zugeführten Einlassluft zu ermöglichen.

2. Gasturbinenmaschine (10) nach Anspruch 1, wobei der Verdichter (14) ein Niederdruckverdichter ist, die Gasturbinenmaschine (10) ferner stromabwärts von dem Niederdruckverdichter (14) einen Hochdruckverdichter (16) aufweist, während der Wärmetauscher (46) zwischen dem Niederdruckverdichter (14) und dem Hochdruckverdichter (16) positioniert ist.

3. Gasturbinenmaschine (10) nach Anspruch 1, wobei der Verdichter (14) ein Niederdruckverdichter ist, die Gasturbinenmaschine (10) ferner einen Hochdruckverdichter (16) stromabwärts von dem Niederdruckverdichter (14) aufweist, und einen Zwischenkühler (50), der stromabwärts von dem Wärmetauscher (46) angeschlossen ist, wobei der Zwischenkühler (50) dafür eingerichtet ist, aus dem Wärmetauscher (46) einen Luftstrom mit einer ersten Temperatur aufzunehmen, und den Luftstrom dem Hochdruckverdichter (16) mit einer zweiten Temperatur zuzuführen, die niedriger als die erste Temperatur ist.

4. Gasturbinenmaschine (10) nach Anspruch 1, wobei das Arbeitsfluid des Wärmetauschers wenigstens eines von Wasser, Dampf und einem Gemisch aus Ammoniak und Wasser ist.

5. Gasturbinenmaschine (10) nach Anspruch 1, wobei der Wärmetauscher (46) ein Wärmerückgewinnungsdampfgenerator ist.

## Revendications

1. Moteur (10) à turbine à gaz muni d'un système de refroidissement (12), le moteur (10) à turbine à gaz comprenant au moins un compresseur (14) et une turbine (22), ledit système de refroidissement (12) comportant :
un échangeur de chaleur (46) monté en aval du compresseur (14) de façon que l'air comprimé refoulé par le compresseur (14) soit amené à passer dans celui-ci, ledit échangeur de chaleur (46) ayant un fluide de travail qui circule dans celui-ci pour transférer dans le fluide de travail de l'énergie thermique issue de l'air comprimé refoulé ; et
un refroidisseur (48) en communication d'écoulement avec ledit échangeur de chaleur (46), ledit refroidisseur (48) extrayant de l'énergie du fluide de travail pour contribuer à abaisser une température d'air d'admission acheminé jusqu'au compresseur (14).

2. Moteur (10) à turbine à gaz selon la revendication 1, dans lequel le compresseur (14) est un compresseur basse pression, le moteur (10) à turbine à gaz comprenant en outre un compresseur haute pression (16) en aval du compresseur basse pression (14), ledit échangeur de chaleur (46) étant placé entre le compresseur basse pression (14) et le compresseur haute pression (16).

3. Moteur (10) à turbine à gaz selon la revendication 1, dans lequel le compresseur (14) est un compresseur basse pression (14), le moteur (10) à turbine à gaz comprenant en outre un compresseur haute pression (16) en aval du compresseur basse pression (14), et un refroidisseur intermédiaire (50) monté en aval dudit échangeur de chaleur (46), ledit refroidisseur intermédiaire (50) étant conçu pour recevoir dudit échangeur de chaleur (46) un flux d'air à une première température et acheminer jusqu'au compresseur haute pression (16) le flux d'air à une seconde température inférieure à la première température.

4. Moteur (10) à turbine à gaz selon la revendication 1, dans lequel le fluide de travail de l'échangeur de chaleur est de l'eau et/ou de la vapeur et/ou un mélange d'ammoniac et d'eau.

5. Moteur (10) à turbine à gaz selon la revendication 1, dans lequel ledit échangeur de chaleur (40) est un générateur de vapeur à récupération de chaleur.
